# EUROPEAN PATENT APPLICATION

(11) **EP 1 109 390 A2**
(43) Date of publication of application: **20.06.2001**
(21) Application number: 00309172.5
(22) Date of filing: 18.10.2000
(51) Int. Cl.: H04M 3/533

(54) **System and method for browsing and searching through voicemail using automatic speech recognition**

(30) Priority: 08.12.1999 US 457189
(71) Applicant: AT&T Corp., New York, NY 10013-2412 (US)
(72) Inventor: Hirschberg, Julia, Cranford, NJ 07016 (US); Whittaker, Stephen, Morristown, NJ 07960 (US)
(74) Representative: Asquith, Julian Peter

(57) **Abstract**

A system and method for voicemail processing which allows a user to easily gist, browser and search through voicemail messages. Each voicemail messages may be transcribed and then indexed for subsequent information retrieval. A user interface provides a user access to information extracted and/or summarized from the voicemail messages. A search mechanism is also provided so that several messages can be searched at one time.

## Description

### BACKGROUND OF THE INVENTION

The present invention relates to the field of voicemail and more particularly to a voicemail system that provides browsing and searching capabilities.

Voicemail has become a very popular method of communication in the corporate workplace. Typically, voicemail systems are connected to a central office of a local telephone company or to a private branch exchange handling calls for a large number of telephones. When one of the telephones serviced by the central office or other system is not answered, the calling party is given an opportunity to leave a telephone message which is stored for later reproduction by the user of the called telephone. The voice mailbox owner is given the ability to reproduce, store or dispose of the message.

When a user has received a number of voicemail messages in their mailbox, the user typically has no choice but to listen to each message in a sequential fashion to determine who sent the message and whether any important or relevant information is contained in the message. Current methods for accessing voicemail or more generally, recorded speech, require that the speech has to be stored and listened to in a sequential and serial manner. This can be a very cumbersome and time consuming process especially when a user has several messages which may range from a few seconds to several minutes long. Additionally, when voice messages contain information such as phone numbers and addresses, the user may be forced to replay the message more than once in order to accurately obtain the needed information from the message.

Accordingly, it would be desirable to have a voicemail system which allows a user to gist, search and browse through the messages in an efficient and intuitive manner.

### SUMMARY OF THE INVENTION

The present invention is an automated voicemail processing system for gisting, browsing and searching through voicemail without having to sequentially listen to each of the voicemail messages. The system includes a voice mail processor which has a transcription component for transcribing one or more voicemail messages into text, a text retrieval component for indexing the one or more transcribed voicemail messages, an information extraction component for identifying selected information within the one or more indexed voicemail messages and a user interface for providing the identified selected information.

Additionally, the system may automatically extract information, such as phone numbers, addresses, dates, etc. from the transcribed voicemail messages. The voicemail messages are then displayed on a computer screen to allow the user to gist, browse and search through their messages. The user may search for specific words, phrases, numbers and/or names within the text of the voicemail messages.

The present invention is also a method for processing voicemail to facilitate gisting, browsing and searching. The method includes the steps of transcribing a plurality of voicemail messages into plain text, indexing the text of the plurality of voicemail messages and then extracting information from the text of the voicemail messages. Extracting may be performed automatically or may be user initiated using user specified criteria. In another embodiment, information is extracted automatically from the text of the voicemail messages in conjunction with the transcribing of the text.

The present invention includes a graphical user interface for use in browsing and searching through the voicemail messages. The graphical user interface facilitates the user's navigation of the voicemail system to enable the same person to have access to and the ability to search for information contained in their voicemails.

The user interface may include a window or screen where the transcribed text of the voicemail messages are displayed. Certain message information such as the name of the caller, date of the call and time of the call can be displayed in a separate window or screen. A search window is integrated into the user interface to allow the user to specify certain search criteria for the user. The user interface of the present invention may be implemented as a stand-alone computer or may be part of a global information network such as the World Wide Web.

In another embodiment, the user interface is phone based where a user may either issue commands via the touch tone keypad or voice commands which are translated by the system.

### BRIEF DESCRIPTION OF THE DRAWINGS

Fig. 1 illustrates a voicemail system in accordance with the teachings of the present invention.

Fig. 2 illustrates a voicemail processor in accordance with the teachings of the present invention.

Fig. 3 is a flow chart illustrates a method of processing voicemail in accordance with the teachings of the present invention.

Fig. 4 is an exemplary screen display showing a voicemail user interface in accordance with the teachings of the present invention.

Fig. 5 is another exemplary screen display showing a voicemail user interface in accordance with the teachings of the present invention.

Fig. 6 is yet another exemplary screen display showing a voicemail user interface in accordance with the teachings of the present invention.

### DETAILED DESCRIPTION OF THE INVENTION

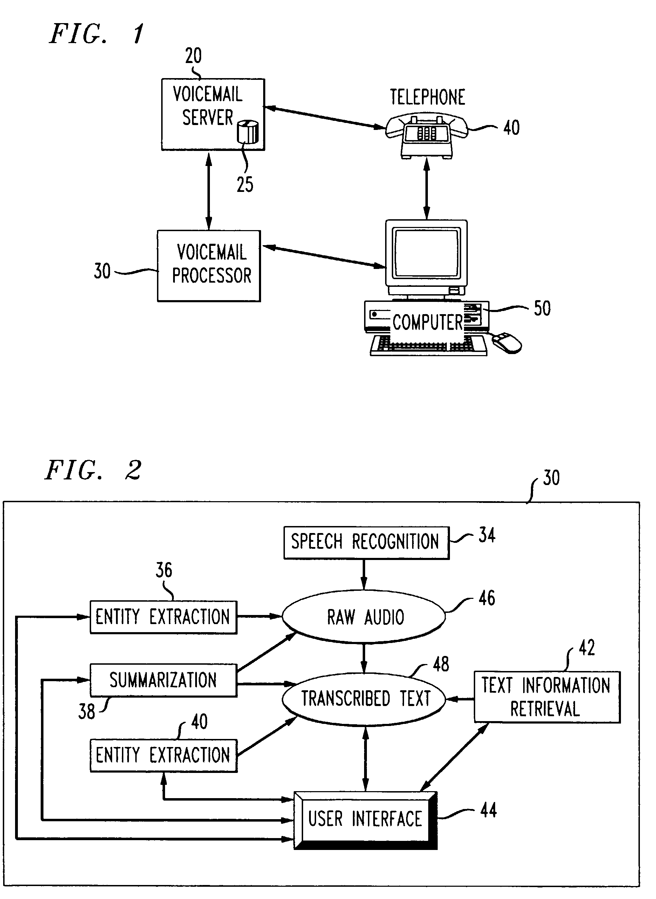

Referring to Fig. 1, a voicemail system 10 of the present invention is shown. The voicemail system 10 includes a voicemail server 20, a voicemail processor 30, a telephone 40 and a computer 50. In one embodiment, the voicemail server 20 and voicemail processor 30 are separate components but may easily be integrated as a single component incorporating both the voicemail server 20 and voicemail processor 30. In a preferred embodiment, telephone 40 is a conventional telephony device compatible with standard voicemail systems and computer 50 is a personal computer (PC). The telephone 40 and computer 50 may also be configurable as a single device such as a PC with telephony capabilities or a telephone having a built-in processor and an interactive screen display. The computer preferably has a display and a pointing device, such as a mouse, trackball, joystick, etc. for controlling the movements of a cursor across the display. The computer also includes a keyboard which is used by the user for entering alpha-numeric information and control keystroke sequences.

In the present invention, voicemail server 20 is responsible for answering incoming calls, playing prompts to callers, accepting commands from callers, processing incoming voice messages to a form suitable for storage and transmitting the processed messages to a message storage device 25 in which the messages are stored. Message storage device 25 typically includes a plurality of multi-retrieval mailboxes which may hold one or more messages. In the system of the present invention, the voicemail server 20 is in communication with voicemail processor 30 which provides for transcription and indexing of the voicemail messages which have been stored in the voicemail server 20.

Referring to Fig. 2, a more detailed view of the voicemail processor 30 is shown. The voicemail processor 30 preferably includes a speech recognition component 34, a first entity extraction component 36, a summarization component 38, a second entity extraction component 40, a text information retrieval component 42, and a user interface component 44. The voicemail processor 30 is responsible for receiving and processing raw audio files of voicemail messages originating from voicemail server 20.

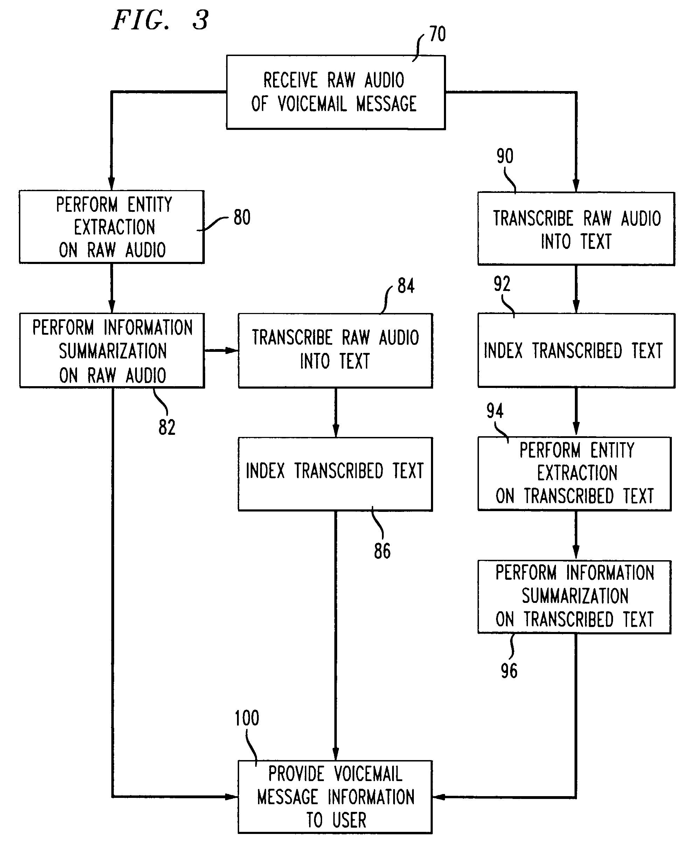

Referring now also to FIG. 3, the system will first receive a selection or file of raw audio 46, step 70. In one embodiment, raw audio 46 may be processed directly by the entity extraction component 36, step 80 and/or the summarization component 38, step 82. After extraction and/or summarization, a user may have access to the voicemail information via a user interface 44, step 100 or alternatively, the raw audio 46 may be further processed by transcribing the raw audio 46 into text, step 84. This text may then be indexed, step 86 to facilitate additional searching/classification of the text.

In another embodiment, raw audio 46 is first transcribed into a textual format, step 90. The text may then be indexed, step 92, to expedite text searching in the message(s). Entity extraction component 40 may further operate on transcribed text 48, step 94. Additionally, summarization component 38 may be used to perform concept, phrase, action item, keyword or other user-specified information summarization of the voicemail message(s), step 96. Finally, the voicemail information may be provided to the user via a user interface, step 100.

In the present invention, entity extraction will be employed to extract standardized information such as name of caller, date, time, etc. while summarization will be employed to identity information not retrieved through entity extraction such as certain concepts, topics, cue phrases, etc. Although, two entity extraction components 36 and 40 are shown in FIG. 2, it is contemplated that a single entity extraction component which operates both on raw audio and transcribed text may be employed. Further information retrieval may be provided via the text information retrieval component 42 through the user interface 44, as discussed in more detail later herein.

In an exemplary embodiment, the speech recognition component employs standard automatic speech recognition (ASR) or simply, speech to text, techniques to derive text from recorded speech, i.e. to identify the letters or words spoken by a human subject in one or more voicemail messages. In the present invention, ASR is used to analyze the speech signals contained in the voicemail message to produce a textual representation of the speech signal. In an exemplary embodiment, such speech recognition techniques may use a combination of pattern recognition and sophisticated guessing based on some linguistic and contextual knowledge to transcribe the speech. It is contemplated that other methodologies and techniques may be used so long as the speech is properly transcribed into a textual format.

In the present invention, transcribing of the voicemails by ASR is preferably performed automatically as soon as a voicemail message is left for a user or alternatively, transcribing may be performed periodically as determined by the user or by system defaults. In one embodiment of the present invention, ASR is performed in conjunction with or immediately subsequent to the recording of the voice or speech signals as voicemail messages. For example, transcribing may be performed as someone is leaving a voicemail message by transmitting the voice signals from, for example, the voicemail server 20 to the voicemail processor 30 as the message is being left. Alternatively, transcribing may performed immediately after the voicemail is saved on the voicemail server by having the voicemail server 20 first transmit the saved voicemail message to the speech recognition component 34 of the voicemail processor 30 and then using ASR to transcribe the voicemail. Once the voicemail message is transcribed, the transcribed text is stored in the voicemail processor, for example, such as on a storage device such as a magnetic hard disk, CD-ROM, WORM, DVD, or other similar storage device.

Alternatively, the system may wait until a certain predetermined number of voicemails are stored for a certain user on the voicemail server 20 before transmitting the voicemails to the voicemail processor 30. Once the certain predetermined number of voicemails is attained, processing of the voicemail messages is performed on the group of voicemails by the speech recognition component 34. For example, the system may be configured to transcribe voicemail messages after at least two or more messages are left in a user's mailbox. As a further alternative, transcribing of the voicemails may be performed only after a user has actively selected for transcribing to be performed on the voicemails. For example, the user may be provided in the system with a menu selection or selection key which when pressed or selected, would initiate transcribing of their voicemails. The user may also be provided with the choice of having specific voicemails of their choosing processed by the system. In this instance, some users may prefer to listen to some of their voicemails in the conventional manner while having other voicemails, such as relatively longer voicemails, transcribed and indexed by the system. It is contemplated that the system may provide the user with the choice of having his/her voicemails processed by the system. In one embodiment, the user may be charged a certain fee for voicemail processing or alternatively, the voicemail processing may be offered as a free value added service.

Once the voicemail messages have been transcribed into text, specific text information retrieval may be performed on the transcribed text through the text information retrieval component. Specific text information retrieval will be useful for searching for word, numbers, letters and/or phrases which have not been specifically extracted or summarized for the user by the system. The text information retrieval component will preferably include an indexing mechanism by which the transcribed text is indexed for faster and more efficient information retrieval by a user through the user interface component, as discussed in more detail later herein.

In the present invention, entity extraction may be performed on the transcribed text. As used herein, the term "entity" refers to information which may be of specific interest such a person' name, address and/or telephone number. Entity extraction or information entity extraction involves the extraction or pulling out of such pertinent information from a collection of text or transcribed voicemails, as in the present invention. Typically, during the entity extraction process, a task definition document is created which defines the format and criteria for extraction of the text from the transcribed voicemails. For example, task definitions give general guidelines and examples for the extraction of named entities, attributes, facts, and events from texts. More particularly, in the present invention, entities such as phone numbers, addresses, dates and places, etc. will be identified in the task definition document for extraction from the transcribed voicemails.

In one embodiment, entity extraction is performed subsequent to the transcribing of the voicemails. In another embodiment, entity extraction may be performed in conjunction with the transcribing of each voicemail or alternatively, entity extraction may be performed prior to transcribing of the voicemail. Essentially, as the voicemail is being transcribed, the system will immediately extract from the voicemail text any information which falls within the criteria specified for extraction.

Once the voicemails have been transcribed, the text of the voicemail message(s) may be indexed using full text indexing techniques. For background purposes, a full text index typically consists of a word list for a collection of text which, for example, resembles the index of a textbook. The index can be viewed as a word list with an ascending order list of numbers associated with each word. Like the index of a book, the numbers refer to the indexing unit where the word occurs in the source text. The user may then submit a query to the index. The index returns a list of record numbers which match the query. A pointer table is then consulted to find out where the record text is located. Then the text itself is retrieved and displayed to the end user via a user interface. It is contemplated that other indexing techniques may be employed within the present invention to provide for more efficient and faster information retrieval within the voicemail messages.

In the present invention, the ASR, text information retrieval and entity extraction component functionality are provided to the user through a user interface, as discussed below. Additionally, the user interface provides the user with summaries and/or the full text of their voicemail messages which have been transcribed and indexed. The user interface may be provided on a telephone 40 or a computer 50 which is in communication with the voicemail processor 30, as discussed earlier herein or may additionally be provided on a hand held computing device or other similar device.

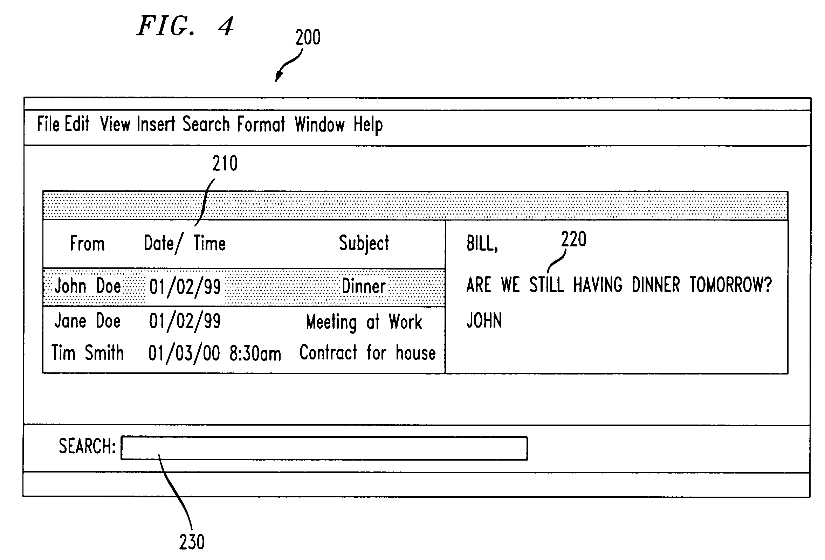

An exemplary user interface for the voicemail system of the present invention is now shown in FIG. 4. The user interface includes a screen 200 which provides a user with configurable sections of information related to the user's voicemails. In an exemplary embodiment, the user interface screen includes header information section 210, a voicemail transcription section 220 and a search section 230.

The header information section 210 provides the user with a summary of each voicemail received by the user in their voicemail mailbox. Such information may be provided by the system from transcription/entity extraction/summarization as discussed above and/or in conjunction with conventional "caller-identification" techniques which may provide information such as the caller name, date/time, and phone number to the voicemail system of the present invention.

The voicemail transcription section 220 provides the user with a textual display of a specific voicemail which is currently highlighted in the header information section 210. For example, as shown in FIG. 4, the voicemail from "John Doe" is currently highlighted and the corresponding text which has been transcribed from the voicemail is shown in the voicemail transcription section 220. Users may also highlight and cut/copy/paste text from the voicemail transcription section 220 as desired. The interface is also multimodal, for example, users may select all or a portion of the text of the voicemail message and the system will playback the selected text as speech to the user.

The search section 230 allows a user to perform free text queries and/or structured text queries on the transcribed voicemails. In an exemplary embodiment, the user may simply enter their desired query in the search section and then press, for example, the <ENTER> key on their keyboard to initiate the search. The user may search for any number of text strings which may include information such as names, phone numbers, addresses and dates.

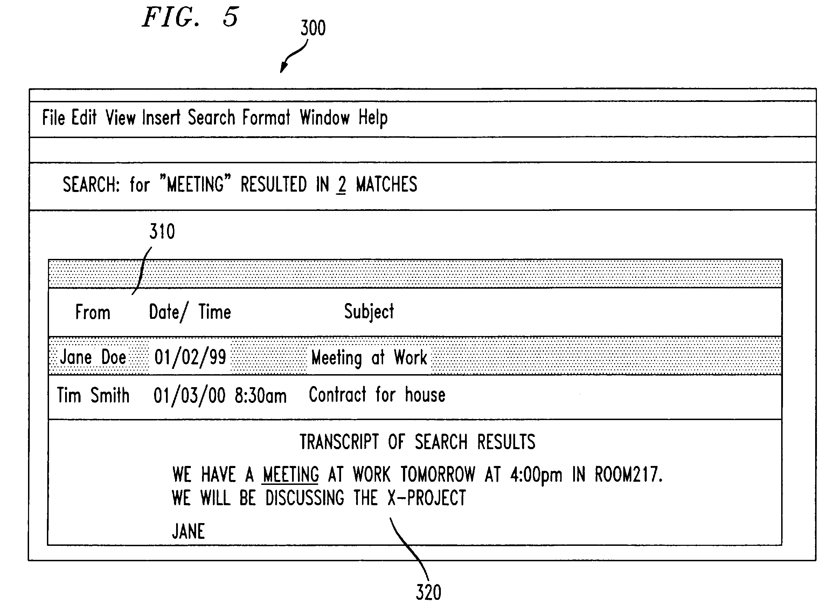

Once a search is initiated and performed as discussed above, the user is provided with a search results display as shown in FIG. 5. For example, a search for the word "meeting" has resulted in two matches. The two matches are shown in a search result information section 310 which provides a summary of the two matching results. Information such as the name of the sender, the date and time and subject of the voicemail may be shown in the search result information section. A textual transcript of the specific highlighted search result may then be displayed in the transcript of search results section 320.

As shown in both FIG. 4 and FIG. 5, standard menu functions may be provided to the user as part of the voicemail system user interface. File functions such as OPEN, SAVE, PRINT may be provided along with EDIT functions such as CUT, COPY, PASTE, CLEAR. Additional specialized functions relating to the voicemail search functions and the arrangement of the display screens may also be provided via the menu.

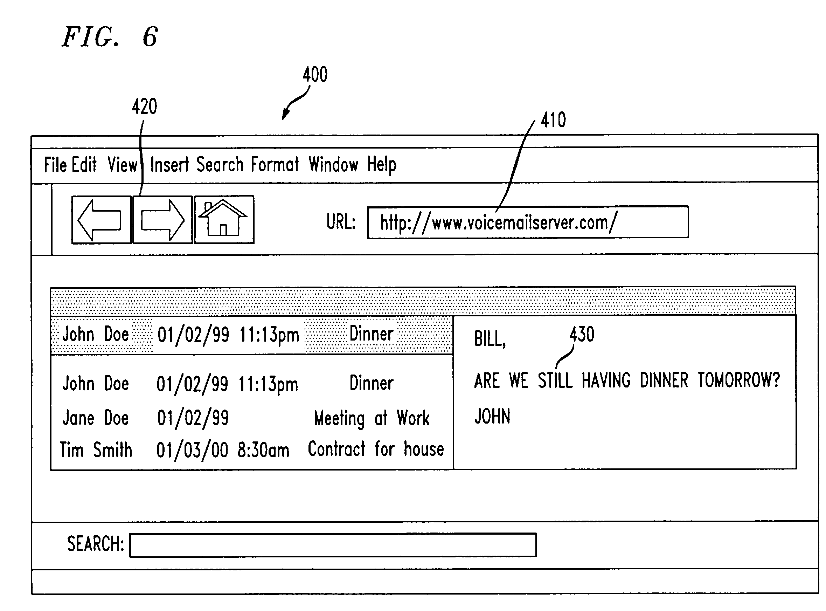

Referring now to FIG. 6, the voicemail user interface of the present invention may be implemented within a generic World Wide Web (WWW) browser 400. The location active region 410 is where the URLs may be typed or entered. If a URL has been stored by the WWW browser 400 for later retrieval, then such URL may be entered into the location region 410 through one or more clicks of a pointing device. Presently, the voicemail system is accessing information from an exemplary "voicemailserver.com" home page. Adjacent to the location region 410 is a row of interactive buttons 420 which help navigate the WWW and below the row of interactive buttons 420 is the active window 430 of the WWW Browser 400. Active window 430 is where, for example, hypertext markup language files are displayed. Most hypertext markup language files have interactive regions, usually highlighted and/or underlined text or graphics, which if selected send a request to an attached server for a next html file of information. This is the selection of a hyperlink or simply link, and the html file is often a page, frame or section of additional information. As shown in FIG. 6, clicking on the desired voicemail header information will bring up the associated transcribed text of the voicemail message in the active window 430. Alternatively, the voicemail message text may displayed in a new window which replaces or overlays the existing browser window.

In a further embodiment of the present invention, the user may have access to the voicemail messages by telephone in a non-conventional manner. In this embodiment, the system will provide to the user a series of voice prompts to which the user may respond by either touching a number on the telephone keypad or by responding verbally to an interactive voice response unit (IVRU). The system may provide basic entity extracted information to the user, such as the name of the called, time, date, etc. The user may be able to search the voicemail messages through a menu given through the IVRU. In this embodiment, the system may either operate on the raw audio files of the voicemail messages directly through entity extraction and summarization techniques, or alternatively the voicemail messages may be transcribed, indexed and searched as text and then subsequently converted back to speech for playback to the user over the telephone user interface.

Additional messaging features, such as message or greeting playback, greeting recording, and various mailbox management functions may also be integrated into the system. These features are invoked through the user interface provided and displayed at the user's workstation. Parties are given access to mailboxes without being required to know on which message server a particular mailbox is located. In embodiments where the raw audio of voicemail messages are transcribed into text, the voicemails may be grouped into category/subject folders depending on the content of the messages. Messages may also be grouped, for example, by identification of the sender of the voicemail and other such groupings.

It will be apparent to those skilled in the art that many changes and substitutions can be made to the armrest herein described without departing from the spirit and scope of the invention as defined by the appended claims.

## Claims

1. An automated voicemail system for processing incoming speech based messages, comprising:
a voice mail processor which includes:
a transcription component for transcribing one or more voicemail messages into text;
a text retrieval component for indexing the one or more transcribed voicemail messages;
an information extraction component for identifying selected information within the one or more indexed voicemail messages; and
a user interface for displaying the identified selected information from the one or more indexed voicemail messages.

2. The system of claim 1, wherein the text retrieval component includes a user configurable search mechanism.

3. The system of claim 1, further comprising:
a summarization component for selecting information from within the one or more voicemail messages.

4. The system of claim 1, wherein the user interface includes a main information screen and a message body screen.

5. A method of processing a plurality of voicemail messages, the method comprising the steps of:
identifying information within the plurality of voicemail messages; and
providing a user interface to a user for access to information identified in the plurality of voicemail messages, wherein the information is identified using entity extraction and summarization techniques.

6. The method of claim 5, wherein the information identified within the voicemail messages includes at least one of telephone numbers, names, dates, keywords, appointments, times and addresses.

7. The method of claim 5, wherein entity extraction is performed upon raw audio files of the plurality of voicemail messages.

8. A method of providing an interface to a plurality of voicemail messages, the method comprising the steps of:
receiving the plurality of voicemail messages as raw audio;
transcribing the plurality of voicemail messages into text;
indexing the text of the plurality of voicemail messages; and
extracting information from the text of plurality of voicemail messages, wherein the information extracted is provides the user with a summary of the information contained within each voicemail message.

9. A voicemail system which provides one or more users access to information contained within a plurality of voicemails, the system comprising:
means for transcribing a plurality of voicemail messages into searchable text; and
means for searching for text within the plurality of voicemail messages.

10. The voicemail system of claim 9, further comprising:
means for extracting specific information from within the plurality of voicemail messages.

11. The voicemail system of claim 9, further comprising:
means for displaying the plurality of voicemail messages on a computer screen.

12. A method of providing a voicemail user interface, comprising the steps of:
generating, by automatic speech recognition, a transcript of at least one voicemail message;
displaying a textual representation of the at least one voicemail message;
providing a search mechanism for searching for text within the at least one voicemail message; and
providing for speech playback of selected text within the voicemail message.

13. The method of claim 12, further comprising the step of:
automatically extracting specific information from the at least one voicemail message.

14. The method of claim 13, wherein the specific information extracted is displayed in a separate textual display.

15. The method of claim 12, further comprising the step of:
generating an index of the transcript of the at least one voicemail message.

16. A voicemail user interface comprising:
a transcript of a plurality of voicemail messages which is generated by automatic speech recognition;
a textual display of the transcript of the plurality of voicemail messages; and
a search mechanism for searching for text within the plurality of voicemail messages.

17. The voicemail user interface of claim 16, wherein the transcript of the plurality of voicemail messages is indexed.

18. The voicemail user interface of claim 16, further comprising:
a search results display for displaying the results of a user initiated search.

19. The voicemail user interface of claim 16, further comprising:
a header information screen which summarizes each of the plurality of voicemail messages.
